(19) Europäisches Patentamt
European Patent Office
Office européen des brevets

(11) EP 0 695 793 B1

(12) **EUROPEAN PATENT SPECIFICATION**

(45) Date of publication and mention of the grant of the patent:
**02.05.2001 Bulletin 2001/18**

(51) Int Cl.7: **C09J 11/04**, C08J 5/06, C08L 21/00

(21) Application number: **95305344.4**

(22) Date of filing: **31.07.1995**

(54) **Adhesive compositions for rubber and fiber, rubber-reinforcing synthetic fibers, and fiber-reinforced rubber structures**

Klebstoffzusammensetzungen für Gummi und Fasern; synthetische Fasern zur Gummiverstärkung und faserverstärkte Gummistrukturen

Compositions adhésives pour caoutchouc et fibres; fibres synthétiques pour renforcer le caoutchouc et structures en caoutchouc renforcés par des fibres

(84) Designated Contracting States:
**BE DE FR GB IT LU NL**

(30) Priority: **01.08.1994 JP 17985394**
**01.08.1994 JP 17985494**
**01.08.1994 JP 17985594**
**25.04.1995 JP 10132295**

(43) Date of publication of application:
**07.02.1996 Bulletin 1996/06**

(73) Proprietor: **TORAY INDUSTRIES, INC.**
**Tokyo 103-8666 (JP)**

(72) Inventors:
- **Toukairin, Hiromitu**
**Okazaki-shi, Aichi, 444 (JP)**
- **Sasaki, Takayuki**
**Okazaki-shi, Aichi, 444 (JP)**
- **Kanda, Yasumi**
**Okazaki-shi, Aichi, 444 (JP)**

(74) Representative: **Coleiro, Raymond et al**
**MEWBURN ELLIS**
**York House**
**23 Kingsway**
**London WC2B 6HP (GB)**

(56) References cited:
**GB-A- 1 263 915**

- **CHEMICAL ABSTRACTS, vol. 90, no. 10, 5 March 1979 Columbus, Ohio, US; abstract no. 73132, XP002007043 & JP-A-53 121 885 (YOKOHAMA RUBBER CO. LTD) 24 October 1978**
- **DATABASE WPI Week 8228 Derwent Publications Ltd., London, GB; AN 80-44156C XP002007044 & JP-A-57 029 586 (TEIJIN KK) , 23 June 1982**
- **KIRK-OTHMER: 'Encyclopedia of chemical technology; Vol. 6; 4th Edtion; pp 391-398', 1993, J. WILEY & SONS**
- **'RöMPP CHEMIE LEXIKON; 10. Auflage; pp 1877-78', 1999, GEORG THIEME VERLAG**

Remarks:
The file contains technical information submitted after the application was filed and not included in this specification

EP 0 695 793 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

Printed by Jouve, 75001 PARIS (FR)

## Description

The present invention relates to adhesive compositions for rubber and fiber, with which the adhesiveness between rubber and synthetic fibers is improved, rubber-reinforcing synthetic fibers coated with the adhesive composition to have improved adhesiveness to rubber, and fiber-reinforced rubber structures comprising the rubber-reinforcing synthetic fibers.

As reinforcing materials for rubber structures such as tires, belts, hoses, etc., synthetic fibers which are used include polyester fibers such as typically polyethylene terephthalate fibers, polyamide fibers such as typically nylon 6 fibers and nylon 66 fibers, aromatic polyamide fibers and polyvinyl alcohol fibers. However, since such synthetic fibers have poor adhesiveness to rubber, various means have heretofore been proposed of improving the adhesiveness of synthetic fibers to rubber by coating the surfaces of synthetic fibers. with an adhesive agent comprising, as a matrix, a compound such as an epoxy compound, an isocyanate compound or a halogenated phenol compound.

For example, one typical adhesive agent for polyester fibers is a mixture prepared by mixing a reaction product of a halogenated phenol such aa 2,6-bis(2',4'-dihydroxyphenylmethyl)-4-chlorophenol and resorcinol-formaldehyde with a liquid comprising a precondensate of resorcinol-formaldehyde and rubber latex (RFL) (see Japanese Patent Publication No. 46-11251). However, when the adhesive agent is used, it is necessary to apply a fairly large amount of the adhesive agent to polyester fibers and to treat the fibers under heat at nigh temperatures in order to make *the* fibers have sufficient adhesive strength (drawing strength). The fibers treated under such severe conditions could have fairly increased initial adhesive strength (drawing strength) in ordinary temperature conditions but, on the contrary, had a problem in that the adhesion of rubber to the cleaved fiber plies is reduced.

A two-step method of applying adhesive agents to polyester fibers is known, in which polyesters are first treated with a first treating liquid comprising a mixture of an epoxy compound, a blocked isocyanate and bentonite and then treated with a second treating liquid comprising RFL and an ethylene-urea compound (for example, see Japanese Patent Publication No. 57-29586). However, this method had problems in that the polyester fibers treated have low heat-resistant adhesive strength (drawing strength) and that the stability of the first treating liquid is poor since bentonite, which is present in the liquid, has a high true specific gravity and a large particle size, is not viscous and is easily precipitated.

Another method is known in which polyester fibers are first treated with a first treating liquid comprising a mixture of an epoxy compound, a blocked isocyanate and a latex and then treated with a second treating liquid comprising RFL (for example, see Japanese Patent Publication No. 60-24226). The polyester fibers treated by this method have relatively high initial adhesive strength (drawing strength) and the adhesion of rubber to the cleaved fiber plies is enriched, but, on the contrary, the method had problems in that the polyester fiber cords treated become hard and the mechanical strength of the cords is lowered with the result that not only do the cords become difficult to shape and work but also the fatigue resistance of the cords is lowered.

Typical known examples of the means of improving the adhesiveness of polyamide fibers to rubber are a method for producing ultra-high-strength nylon tire-reinforcing cords by dipping tire-reinforcing cords comprising ultra-high-strength nylon fibers of nylon 6 or nylon 66 fibers having a single yarn denier of 4.5 d or less and a raw yarn strength of 12 g/d or more, in a liquid mixture comprising a resorcinol-formaldehyde precondensate and a rubber latex, while the cord strength is controlled to be 0.5 g/d or more (see JP-A-63-175179), and a method for producing rubber-reinforcing polyamide fibers by heat-treating twisted cords comprising nylon 66 fibers having a raw yarn strength of 12 g/d or more under tension at particular temperatures, followed by dipping them in a dipping liquid comprising a vinylpyridine-styrene-butadiene copolymer rubber latex where the proportion of vinylpyridine is specifically defined relative to the total weight of the latex, whereby the decrease in the strength of the thus-treated cords is prevented (see JP-A-1-174628). However, during the practical use of the rubber-reinforcing polyamide fibers obtained according to these methods various problems were encountered in that since the fibers had a single yarn denier of 4.5 d or less, particular dipping steps had to be applied to the fibers and the improvement in the adhesiveness of the fibers to rubber was not still satisfactory, so that the use of the treated fiber cords was therefore limited.

One known typical example of the technique of improving the adhesiveness of aromatic polyamide fibers to rubber is a method comprising dipping an aromatic polyamide fiber material in a first treating liquid comprising a polyepoxy compound having hydroxyl group(s) and an epoxy compound having unsaturated bond(s), followed by heat-treating it, and thereafter treating it with a second treating liquid of a resorcinol-formaldehyde-rubber latex (RFL) (see JP-A-61-126142). However, this method had a problem in that the adhesiveness between the aromatic polyamide fibers obtained and rubber is still inferior to that between nylon fibers or polyester fibers and rubber.

Another method is known, comprising treating aromatic polyamide fibers with a first treating liquid comprising a polyepoxy compound, a blocked isocyanate compound and a rubber latex compound, followed by treating them with a second treating liquid comprising a resorcinol-formaldehyde-rubber latex (RFL) and a particular chlorophenol compound (see JP-A-3-40875). The aromatic polyamide fibers obtained by this method can exhibit adhesiveness to rubber comparable to the adhesiveness of nylon or polyester fibers to rubber, but the method still has a problem in that the

amounts of the adhesive compositions to be applied to the fibers has to be large in order to attain a satisfactory adhesiveness and therefore the coats of the adhesive compositions are high.

The present invention seeks to provide adhesive compositions for rubber and fibers, which make synthetic fibers highly adhesive to rubber even when a reduced amount of the composition is applied to the fibers.

The present invention also seeks to provide rubber-reinforcing synthetic fibers having improved adhesiveness to rubber, specifically, improved initial adhesive strength (drawing strength) to rubber and improved adhesiveness to rubber at cleaved fiber plies, while still having the intrinsic characteristics of the synthetic fibers themselves.

The present invention also seeks to provide fiber-reinforced rubber structures where the rubber has been reinforced by synthetic fibers.

As a first aspect, the present invention provides an adhesive composition for rubber and fiber, which may be applied in smaller amounts than conventional compositions and still provide excellent adhesion of synthetic fibers to rubber, which composition comprises an adhesive matrix into which has been incorporated a silicate compound comprising, as elements thereof silicon and magnesium, at a ratio by weight of silicon/magnesium of from 10/1 to 1/1. Additionally, the silicate compound is such that the transmittance (T) of a 1 % aqueous dispersion of the silicate compound is 50 % or more. The thixotropy index of a 2 % aqueous dispersion thereof is preferably from 2 to 10.

As its second aspect, the present invention provides a synthetic fiber suitable for reinforcing rubber and having coated on its surface the above-mentioned adhesive composition. The provision of the coating renders the fibers capable of improved adhesiveness to rubber, especially an improved initial strength of adhesion ("drawing strength") to rubber, improved adhesion to rubber at cleaved fiber plies and maintenance of the intrinsic characteristics of the uncoated synthetic fibers themselves.

Thus, as its third aspect, the present invention provides fiber-reinforced rubber structures, which are reinforced by the synthetic fibers of the second aspect of the invention.

A preferred silicate compound in a composition in accordance with the invention has the following characteristics:

(a) it comprises silicon and magnesium as essential constituent elements at a ratio by weight of silicon/magnesium of from 1/0.1 to 1/1; and

(b) a 1 % aqueous dispersion of the compound has a transmittance (T) of 50 % or more; and/or

(c) the thixotropy index of a 2 % aqueous dispersion thereof is from 2.0 to 10.0. The most preferred example of the silicate compound is the synthetic clay smectite.

Preferably, the adhesive matrix comprises (and may consist essentially of) an adhesive matrix component, which component consists essentially of a resorcinol-formaldehyde-rubber latex or of at least one compound selected from a polyepoxide compound, a blocked polyisocyanate compound, an ethylene-urea compound and a rubber latex, more preferably a rubber latex and at least one compound selected from polyepoxide, blocked polyisocyanate and ethylene-urea compounds, and even more preferably a rubber latex, a polyepoxide compound and at least one compound selected from polyisocyanate and ethylene urea compounds, so that the coatings together may provide a composition embodying the invention.

In addition, the silicate compound may be incorporated into the matrix component by merely adding it thereto. It is preferable that the amount of the silicate compound present in the adhesive matrix component is from 1 to 15 % by weight relative to the component.

In the second aspect of the invention, it is preferable that the synthetic fibers are polyester fiber cords while the amount of the adhesive composition to coat the fiber cords is from 2 to 4 % by weight of solids relative to the weight of the fibers, the cord hardness is from 5 to 20 g/cord and the drawing T-adhesive strength of one cord is from 5.8 to 7.5 g/d; that the synthetic fibers are polyamide fiber cords while the amount of the adhesive composition to coat the fiber cords is from 2 to 5 % by weight of solids relative to the weight of the fibers, the cord hardness is from 5 to 20 g/cord and the drawing T-adhesive strength of one cord is from 5.5 to 7.5 g/d; that the synthetic fibers are aromatic polyamide fiber cords while the amount of the adhesive composition to coat the fiber cords is from 3 to 5 % by weight of solids relative to the weight of the fibers, the cord hardness is from 5 to 20 g/cord and the drawing T-adhesive strength of one cord is from 5.5 to 7.5 g/d; or that the synthetic fibers are polyvinyl alcohol fiber cords while the amount of the adhesive composition to coat the fiber cords is from 2 to 5 % by weight of solids relative Lo the weight of the fibers, the cord hardness is from 5 to 20 g/cord and the drawing T-adhesive strength of one cord is from 5.5 to 7.5 g/d.

In the second aspect of the invention, in addition, it is preferable that the synthetic fiber cords have both a primary twist and a final twist while the twist coefficient for the final twist is from 900 to 1800 and the twist coefficient for the primary twist is from 1300 to 2500.

The fiber-reinforced rubber structures of the third aspect of the invention include, for example, tires, belts and hoses.

The present invention is described in detail hereinunder.

First, adhesive compositions embodying the invention and suitable for adhesion of rubber and fiber to one another are described.

The silicate compound to be incorporated into the adhesive matrix component in an adhesive composition of the present invention is an inorganic compound which comprises, as constituent elements, silicon and magnesium, and optionally at least one of sodium, lithium, flourine and/or aluminium as additional constitutive element(s), preferably sodium and lithium. Especially preferred is a synthetic inorganic compound which is referred to as a smectite.

According to the present invention, the transmittance (T) of a 1 % aqueous dispersion of the silicate compound is 50 % or more, especially 70 % or more.

It is desirable that the thixotropy index of a 2 % aqueous dispersion of the silicate compound is from 2.0 to 10.0, especially from 3.0 to 9.0, arid that the specific surface area of the compound is from 100 to 500 $m^2/g$, especially from 150 to 400 $m^2/g$.

The transmittance (T), the thixotropy index and the specific surface area referred to herein are values obtained according to the methods mentioned below.

Transmittance (T):

A 1 % aqueous dispersion of a silicate compound to be measured is well stirred and then kept static for one full day. After having confirmed that the dispersion has no precipitate, the dispersion is put in a cell having a length of 10 mm, and the transmittance therethrough at 500 nm is measured with a spectrophotometer (U-3000 Model, produced by Hitachi).

Thixotropy Index (TI):

A 2 % aqueous dispersion of a silicate compound to be measured is well stirred then kept static for one full day. After having confirmed that the dispersion has no precipitate, the viscosity of the dispersion is measured with a viscometer (B Model, produced by Shibaura System). A No. 3 rotor is used for the test. The rotor is rotated for one minute at 6 rpm and 60 rpm but is stopped for 2 minutes just before the measurement.

$$TI = (\text{viscosity at 6 rpm})/(\text{viscosity at 60 rpm})$$

Specific Surface Area:

A specific surface area meter, Quantasorb (produced by Yuasa Ionics) is used. The exclusive cell for the device is weighed and then filled with a silicate compound to be measured in an amount of about a half of the cell (about 0.15 g). The thus-filled cell is weighed and measured with the Quantasorb in a standard manner. The specific surface area of the compound is calculated as follows:

$$\text{Specific Surface Area } (m^2/g) = (A/AC) \times (V \times 2.81/\text{amount of sample (g)})$$

A: the value indicated by the integrating meter, after the cell has been taken out of liquid nitrogen and dipped in water at room temperature.
AC; the value indicated by the integrating meter, after pure liquid nitrogen gas has been introduced.
V: A/1300.

The silicate compound, especially the synthetic smectite gives a thixotropic dispersion having a stable viscosity and having the function of enlarging its specific surface area, when dispersed in water.

Thus, the silicate compound acts as a penetration inhibitor and as a softening agent. Therefore, even when a reduced amount of the adhesive composition for rubber and fiber which contains the silicate compound is applied to synthetic fibers, not only is the stable adhesiveness of the fibers to rubber improved but also the fiber cords thus treated become softened and decrease in the cord strength is effectively prevented.

Although not wishing to be bound by theory, it is believed that, since the silicate compound has many hydroxyl groups in its surface, it adsorbs the water molecules in the adhesive composition and penetrates through fiber cords whereby the penetration of the adhesive matrix component, which may comprise, for example, at least one of an epoxy compound, an isocyanate compound and a rubber latex, into the depths of fiber cords is retarded. Therefore, when the fiber cords to which the adhesive composition has been applied are subjected to heat treatment, the adhesive

matrix component is solidified on the surface layer of each fiber cord while the silicate compound is substantially left in the depths of the fiber cord. As a result, the degrees of freedom of the single yarns in the depths of the cord are enlarged, and the softness of the fiber cords is improved and the high strength of the fiber cords themselves is maintained.

In addition, the adhesive matrix component, especially, for example, rubber latex, in the adhesive composition is prevented from being coagulated, due to the addition of the silicate compound to the composition, and therefore the adhesive matrix component is uniformly mixed and stabilized in the composition and can adhere uniformly onto the surfaces of the fibers with high coagulating strength. For these reasons, the fibers coated with even a small amount of the adhesive composition of the present invention can have excellent adhesiveness to rubber.

The silicate compound is incorporated into a treating liquid with a one-bath adhesive formulation (hereinafter referred to as treating liquid A) or into a treating liquid with a two-bath adhesive formulation (hereinafter referred to as treating liquid B).

The treating liquid with a one-bath adhesive formulation may be an adhesive composition where the adhesive matrix component consists essentially of a reaorcinol-formaldehyde-rubber latex, and this is applied to synthetic fiber cords in one step.

The resorcinol-formaldehyde-rubber latex which is the essential adhesive matrix of a particularly preferred one-bath adhesive composition is a mixture comprising a precondensate of resorcinol-formaldenyde and a rubber latex. This is generally referred to as RFL, which abbreviation will be adopted hereinafter.

The precondensate of resorcinol and formalin in the RFL can be obtained by their reaction in the presence of an alkaline catalyst, and it is desirable that the molar ratio of resorcinol to formalin is from 1/0.3 to 1/3.0, especially preferably from 1/0.75 to 1/1.50.

It is desirable that the RFL is a mixture obtainable by mixing a precondensate obtainable by the reaction of a compound of the following general formula (I) and formalin at a ratio by weight of from 1/10 to 10/10 in the presence of an alkaline catalyst, with a rubber latex mixture obtainable by mixing a rubber latex and aqueous ammonia at a ratio by weight of from 10/0.1 to 20/1, at a ratio by weight of from 1/8 to 1/4 in terms of the solid contents.

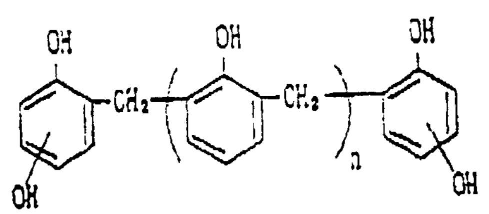

(I)

wherein n represents 0 or an integer of from 1 to 15.

A compound of formula (I) which may be used is a novolak-type resin obtainable by reacting dihydroxybenzene and formaldehyde in the absence of a catalyst or presence of an acidic catalyst. More specifically, this compound is a condensate obtainable by condensing one mol of resorcinol and 0.70 mole of formaldehyde (for example, Sumicanol-700 (trade name) produced by Sumitomo Chemical).

Where the novolak-type condensate of resorcinol and formalin is used in the RFL, it is desirable that the condensate is dissolved in an aqueous dispersion of an alkaline catalyst, to which formalin is added, thereby to have the same molar ratio as that of the resorcinol-formalin precondensate.

Rubber latexes which may be present in the RFL include a natural rubber latex, a styrene-butadiene rubber latex, an acrylonitrile-butadiene rubber latex, a chloroprene rubber latex and a vinylpyridine-styrene-butadiene rubber latex. These can be used either singly or in mixtures thereof. In particular, when a vinylpyridine-styrene-butadiene latex is used along with other rubber latexes, it is desirable that the ratio of the vinylpyridine-styrene-butadiene latex to the other rubber latexes is 70 % by weight or less.

It is preferable that the treating liquid A is used as a solution or dispersion having a total solid concentration of the adhesive matrix component of from 5 to 20 %, especially from 8 to 16 %. The treating liquid A is preferably applied to polyamide fibers and polyester fibers of synthetic fibers, especially preferably to high-strength nylon 66 fiber cords.

The treating liquid B of a particularly preferred two-bath adhesive formulation is an adhesive composition where the adhesive matrix component comprises (but may consist essentially of) at least one compound selected from polyepoxide compound, blocked polyisocyanate compounds and ethylene-urea compounds. An especially preferred treating liquid B comprises a mixture of (1) a polyepoxide, (2) at least one compound selected from blocked polyisocyanate and ethylene-urea compounds and optionally additionally (3) a rubber latex, or consists essentially of compounds (1) and (2). This treating liquid B is applied to synthetic fiber cords, which are thereafter treated with a second treating liquid comprising RFL as the essential adhesive matrix component (hereinafter referred to as treating liquid C).

The polyepoxide compound to be in the treating liquid B may be a compound having two or more epoxy groups in one molecule and includes, for example, reaction products of polyalcohols, such as glycerol, pentaerythritol, sorbitol, ethylene glycol, polyethylene glycol, propylene glycol and polypropylene glycol, and halogen-containing epoxides such as epichlorohydrin; reaction products of polyphenols, such as resorcinol, bis(4-hydroxyphenyl)dimethylmethane, phenol-formaldehyde resins and resorcinol-formaldehyde resins, and halogen-containing epoxides such as those mentioned above; polyepoxide compounds obtained by oxidizing the unsaturated bond part of bis-(3,4-epoxy-6-methyldicyclohexylmethyl) adipate or 3,4-epoxycyclohexene-epoxide.

Of these polyepoxide compounds, especially preferred are reaction products of polyalcohols and epichlorohydrin (polyglycidyl ether compounds of polyalcohols).

The blocked polyisocyanate compound to be in the treating liquid B may be a compound capable of releasing the blocking agent under heat to give an active isocyanate compound and includes, for example, reaction products of polyisocyanate compounds such as tolylene diisocyanate, metaphenylene diisocyanate, diphenylmethane diisocyanate, hexamethylene diisocyanate and triphenylmethane triisocyanate, and a blocking agent selected from phenols such as phenol, cresol and resorcinol, lactams such as ε-caprolactam and valerolactam, oximes such as acetoxime, methyl ethyl ketone oxime, cyclohexane oxime, and ethyleneimine.

Of these blocked polyisocyanate compounds, especially preferred are ε-caprolactam-blocked aromatic polyisocyanate compounds, which produce especially good results.

The ethylene-urea compound in the treating liquid B may be a compound such that the ethyleneimine ring in the compound is cleaved under heat and the thus-cleaved product acts to improve the adhesiveness of the fibers coated with the adhesive composition. Typical examples of the compound are reaction products of aromatic or aliphatic isocyanates such as hexamethylene diisocyanate, tolylene diisocyanate, diphenylmethane diisocyanate and triphenylmethane triisocyanate, and ethyleneimine.

Especially preferred ethylene-urea compounds are aromatic ethylene-urea compounds such as diphenylmethane-diethylene-urea, which produce especially good results.

The treating liquid B may contain either one or both of the blocked polyisocyanate compound and the ethylene-urea compound.

The rubber latex optionally in the treating liquid B depends on the rubber into which the fibers coated with the adhesive composition are to be embedded and includes,
for example, vinylpyridine-styrene-butadiene copolymer latexes, styrene-butadiene-type rubber latexes, acrylonitrile-butadiene-type rubber latexes, chloroprene-type rubber latexes, chlorosulfonated polyethylene latexes, acrylate-type rubber latexes and natural rubber latexes.

The proportions of the polyepoxide compound, the blocked polyisocyanate compound and/or ethylene urea compound, and the rubber latex present in an especially preferred treating liquid B are preferably from 10 to 25 % by weight, from 20 to 35 % by weight and from 0 to 70 % by weight, respectively, more preferably from 10 to 20 % by weight, from 20 to 30 % by weight and from 0 to 70 % by weight, respectively.

If the proportions of the polyepoxide compound and the blocked polyisocyanate compound and/or ethylene-urea compound are smaller than those falling within the above-mentioned ranges, the initial adhesive strength of the synthetic fibers treated with the adhesive composition may be lowered and such is unfavorable.

It is preferable that the treating liquid B is used as a solution or dispersion having a total solid concentration of the adhesive matrix component of from 2 to 10 %, especially from 4 to 7 %. The treating liquid B is preferably applied to polyester fibers and aromatic polyamide fibers.

The treating liquid C (second treating liquid) that is applied to the synthetic fibers treated with the treating liquid B preferably comprises a mixture of RFL and an ethylene-urea compound. The rubber latex to be in the RFL includes, for example, vinylpyridine-styrene-butadiene copolymer latexes, styrene-butadiene-type rubber latexes, acrylonitrile-butadiene-type rubber latexes, chloroprene-type rubber latexes, chlorosulfonated polyethylene latexes, acrylate-type rubber latexes and natural rubber latexes, as in the first treating liquid,

The ethylene-urea compound to be in the treating liquid C includes, for example, reaction products of aromatic or aliphatic isocyanates such as hexamethylene diisocyanate, tolylene diisocyanate, diphenylmethane diisocyanate and triphenylmethane triisocyanate, and ethyleneimine, as in the treating liquid B.

The amount of the ethylene-urea compound to be added to the treating liquid C in order to improve the adhesiveness of the adhesive composition is preferably from 3 to 30 % by weight, especially preferably from 10 to 20 % by weight, relative to RFL. If the amount of the ethylene-urea compound in the treating liquid C is smaller than 3 % by weight, the effect of the compound in improving the adhesiveness of the adhesive composition is unsatisfactory. However, even if the compound is added in an amount larger than 30 % by weight, the improvement in the adhesiveness of the adhesive composition is saturated and the addition of such a large amount of the compound rather may produce negative results such as a reduction in the mechanical strength of the cured fibers.

It is preferable that the treating liquid C is used as a solution or dispersion having a total solid concentration of the adhesive matrix component of from 5 to 20 %, especially from 7 to 15 %.

The silicate compound may be added to the treating liquid A or B, and the amount of the compound to be added is from 1 to 15 % by weight relative to the adhesive matrix component in the liquid. Especially preferably, the amount of the compound to be added to the treating liquid A is from 2.0 to 5.0 % by weight, and that to be added to the treating liquid B is from 3 to 10 % by weight. If the amount of the silicate compound in the treating liquid is smaller than 1.0 % by weight, it is impossible to prevent sufficiently the reduction in the mechanical strength of the fiber cords treated with the liquid. If, however, it is larger than 15.0 % by weight, the adhesiveness of the fiber cords treated with the liquid to rubber is often lowered.

Preferred rubber-reinforcing synthetic fibers embodying the present invention are now described.

Such rubber-reinforcing synthetic fibers may take the form, for example, of filament yarns, cords, woven structures and woven fabrics, comprising synthetic fibers, such as polyamide fibers, polyester fibers, aromatic polyamide fibers and polyvinyl alcohol fibers, and are characterized in that their surfaces have been coated with the above-mentioned adhesive composition suitable for adhesion rubber and fiber to one another. Especially preferred are cords of such fibers having both a primary twist and a final twist in the opposite directions at a twist coefficient of from 1500 to 2300, especially from 1600 to 2000.

The polyester fibers are preferably made from polyethylene terephthlate or a high molecular weight linear polyester consisting essentially of ethylene terephthalate units.

The polyamide fibers are preferably made from nylon 6 or nylon 66. Especially preferred arc ultra-high-strength nylon 66 cords made of fibers of high-molecular weight nylon 66 having a relative viscosity (relative to sulfuric acid and measured at a temperature of 25°C in solution of 1% sulfuric acid of 3.0 or more, preferably 3.5 or more, and containing an antioxidant comprising a copper compound by which the durability of the cords against the deterioration by heat, light and oxygen is improved.

The aromatic polyamide fibers are preferably made from, for example, poly-p-phenylene-terephthalamide, poly-p-phenylene-3,4'-diphenylether-terephthalamide and copolymers consisting essentially of these.

The polyvinyl alcohol fibers are preferably made of polyvinyl alcohol having a degree of polymerization of 500 or more, especially 2000 or more.

The rubber-reinforcing synthetic fibers of the present invention can be produced by treating synthetic fibers with the above-mentioned one-bath or two-bath treating liquid comprising the adhesive composition of the invention.

The one-bath adhesive formulation mentioned above is preferably applied to polyamide fibers, polyester fibers and polyvinyl alcohol fibers, especially to ultra-high-strength nylon 66 fibers. These are formed into rubber-reinforcing synthetic fibers, for example, according to the process mentioned below.

Non-treated fiber cords are directly, or after having been woven into cord fabrics, fed to a dipping step where the treating liquid A mentioned above is applied to the non-treated fiber cords or cord fabrics.

The treating liquid A may be applied to the non-treated fiber cords by any of dipping, coating and spraying methods, in order to provide a coating on their surface of the adhesive composition, and it is desirable that the cord tension during the process is generally approximately from 0.05 to 0.20 g/d.

It is desirable that the amount of the treating liquid A to be adhered to polyamide fiber cords is from 2.0 to 5.0 % by weight of fiber, especially preferably from 2.5 to 4.0 % by weight, in terms of the solid content in the liquid, and that the amount to polyvinyl alcohol fiber cords is from 2.0 to 5.0 % by weight, especially preferably from 2.5 to 4.0 % by weight. The amount of the treating liquid A to be adhered to the fiber cords can be controlled by varying the concentration of the dipping liquid, the amount of the silicate compound in the liquid A and the conditions for wiping the dipped cords.

After the treating liquid A has been applied to the fiber cords, the thus-dipped cords are dried at 100 to 160°C for 60 to 120 seconds and then heat-treated under tension at 210 to 250°C for 30 to 60 seconds in a hot-stretching zone. The cord tension during the process shall be so controlled that the intermediate elongation and the thermal shrinkage of the cord may have predetermined values. It is desirable that the conditions for the thermal relaxation treatment and the time for the treatment in the next normalizing zone are the same as those in the previous hot-stretching zone.

The two-bath adhesive formulation mentioned above is preferably applied to polyester fibers and aromatic polyamide fibers. These can be formed into rubber-reinforcing synthetic fibers, for example, according to the process mentioned below.

First, the treating liquid B is applied to fiber cords, which are then dried at 70 to 150°C and thereafter heat-treated at 200 to 255°C.

Next, the treating liquid C is applied to the fiber cords, which are then dried at 70 to 150°C and thereafter heat-treated at 200 to 255°C, as previously.

The amount of the treating liquid B of the first bath to be adhered to the synthetic fiber cords is preferably from 1.0 to 2.0 % by weight of fiber, especially preferably from 1.2 to 1.7 % by weight, in terms of the solid content of

the liquid, for polyester fibers and is preferably from 1,0 to 3.0 % by weight, especially preferably from 1.2 to 2.0 % by weight for aromatic polyamide fibers.

The thus-obtained rubber-reinforcing synthetic fibers of the present invention preferably have a cord hardness of from 5 to 20 g/cord and preferably have a drawing T-adhesive strength of one cord of from 5.5 to 7.5 g/d. Even though the amount of the adhesive composition adhered to the fibers is small, the adhesiveness of the fibers to rubber is extremely high.

Therefore, the rubber-reinforcing synthetic fibers of the present invention can be formed into soft and high-grade cords having excellent adhesiveness (drawing strength) to rubber and having excellent fatigue resistance. These are useful as reinforcing materials for rubber products such as tires, belts and hoses.

In particular, the dipped polyamide fiber cords have a high mechanical strength and have high adhesiveness to rubber and, in addition, the high mechanical strength of the cords is well maintained even after the cords are combined with rubber and subjected to vulcanization. Therefore, the dipped polyamide fiber cords may be formed into high-strength vulcanized cords. Where the high-strength vulcanized cords are used as reinforcing materials for tires, the number of the cords which need to be in one tire may be reduced. Where these are woven into cord fabrics, the number of the plies which need to be in one cord fabric may be reduced.

Since the fiber cords treated with the adhesive composition of the present invention may be finer (of lower denier) than fibers treated with conventional adhesive compositions, the fiber cords treated with the adhesive composition can have a reduced weight without lowering their rubber-reinforcing function. Therefore, using the rubber-reinforcing fiber cords of the present invention, it is possible to realize lightweight fiber-reinforced rubber structures.

The fiber-reinforced rubber structures of the present invention are characterized in that the rubber in rubber structures have been reinforced by the rubber-reinforcing synthetic fibers mentioned above. These structures exhibit high-grade characteristics, as being soft and having improved adhesiveness (drawing strength) between the fibers and rubber therein and improved fatigue resistance. Therefore, these fiber-reinforced rubber structures are extremely useful, for example, as tires, belts and hoses.

Embodiments of the present invention are now described in more detail by means of the following Examples and Comparative Examples, for which the data of the samples produced were obtained according to the methods mentioned below.

(1) T-adhesive Strength;

According to the adhesive strength-A method of JIS L-1017 (1983), a treated cord *is embedded* in non-vulcanized rubber and subjected to pressure vulcanization at 150°C for 30 minutes. After cooling, the cord is drawn out of the rubber block at a speed of 30 cm/min, whereupon the drawing load per cm is divided by the fineness of the cord. The thus-obtained value is represented as a unit of g/d. The fineness is measured according to JIS L-1017 (1983). For polyester fiber cords and polyamide fiber cords, the fineness is based on the corrected weight, which is referred to as a conditioned fineness (size). For aromatic pclyamide fiber cords, the fineness is based on the bone dry weight, which is referred to as an absolute dry fineness (size).

(2) Cord Eardness:

A treated cord is made straight and cut into 2 cm pieces. Such a piece is placed on the bridge of a Tensilon tensile tester (1 cm distance; $\phi$ = 0.6 mm), and a hook bar ($\phi$ = 0.6 mm) which is perpendicular to the cord is applied to the center of the cord and pulled down at a speed of 2 cm/min, whereupon the maximum stress is obtained. The thus-obtained value is referred to as the cord hardness.

(3) Fatigue Resistance (in terms of disc fatigue by the Goodrich method):

According to JIS L-1017 (1983), a rubber block having polyester fibers embedded therein is fixed around two discs, which are inclined to have a degree of elongation of 5 % and a degree of compression of 20 %. Under these conditions, the rubber block is repeatedly fatigued at 1705 rpm for 48 hours. After this, the percentage (%) of the retention of the strength of the rubber block is measured. The rubber compound used is a non-vulcanized rubber for a conventional carcass consisting essentially of natural rubber.

(4) Amount of Resin Adhered:

The amount of the resin adhered to polyester fibers, polyamide fibers, aromatic polyamide fibers or polyvinyl alcohol fibers is obtained according to the weight method of JIS 1-1017 (1983).

The constituent elements, the transmittance (T) of a 1 % aqueous dispersion, the thixotropy index of a 2 % aqueous dispersion and the specific surface area of each of eight silicate compounds used in the following Examples and Comparative Examples are shown in Table 1 below. Samples A to D are synthetic smectites satisfying the conditions of the present invention, and Samples E to H are natural silicate compounds not satisfying these conditions.

Table 1 - Chemical Compositions of Silicate Compounds (wt.%)

| Samples | Examples (synthetic smectites) | | | | Comparative Examples (natural silicates) | | | |
|---|---|---|---|---|---|---|---|---|
| | A | B | C | D | E | F | G | H |
| Components | | | | | | | | |
| $SiO_2$ | 54.5 | 54.5 | 56.1 | 59.5 | 65.0 | 70.82 | 80.93 | 91.01 |
| (Si content) | (25.5) | (25.5) | (26.2) | (27.8) | (30.4) | (33.1) | (37.8) | (42.5) |
| $Al_2O_3$ | 0.19 | 0.19 | - | - | 16.0 | 21.94 | 14.76 | 5.82 |
| (Al content) | (0.10) | (0.10) | - | - | (8.5) | (11.6) | (7.81) | (3.03) |
| $Fe_2O_3$ | - | - | - | - | 3.5 | 0.17 | 0.13 | 0.48 |
| (Fe content) | - | - | - | - | (2.4) | (0.12) | (0.09) | (0.33) |
| CaO | - | - | - | - | 3.5 | 0.02 | 0.02 | 0.02 |
| (Ca content) | - | - | - | - | (2.5) | (0.01) | (0.01) | (0.01) |
| MgO | 27.2 | 27.9 | 26.6 | 27.3 | 2.5 | 0.01 | 0.01 | 0.04 |
| (Mg content) | (16.4) | (16.8) | (16.0) | (16.5) | (1.5) | (0.006) | (0.006) | (0.02) |
| $K_2O$ | - | - | - | - | 1.5 | 0.92 | 0.98 | 0.92 |
| (K content) | - | - | - | - | (1.2) | (0.76) | (0.81) | (0.76) |
| $Na_2O$ | 5.8 | 2.7 | 3.6 | 3.8 | 2.0 | 0.18 | 0.91 | 0.18 |
| (Na content) | (4.3) | (2.0) | (2.7) | (2.8) | (1.5) | (0.13) | (0.'4) | (0.43) |
| $Li_2O$ | 1.1 | 1.1 | 1.4 | 0.8 | - | - | - | - |
| (Li content) | (0.59) | (0.5) | (0.6) | (0.4) | - | - | - | - |
| $TiO_2$ | - | - | - | - | - | 0.49 | 0.15 | 0.27 |
| (Ti content) | - | - | - | - | - | (0.29) | (0.09) | (0.18) |
| F | 2.9 | - | 5.6 | - | - | - | - | - |
| Ig-loss | 8.3 | 13.8 | 6.7 | 8.6 | 6.0 | 5.51 | 2.83 | 1.53 |
| Transmittance (%) | 95 | 95 | 95 | 95 | 0.1 | Precipitated and separated | Precipitated and separated | Precipitated and separated |
| Specific Surface Area ($m^2/g$) | 180 | 170 | 170 | 170 | 35 | 27 | 20 | 17 |
| Thixotropy Index | 8.9 | 7.8 | 3.0 | 6.5 | | | | |
| Viscosity (as 2 % aqueous dispersion, c.p.s.) | | | | | Unmeasurable due to precipitation and separation | Unmeasurable due to precipitation and separation | Unmeasurable due to precipitation and separation | Unmeasurable due to precipitation and separation |
| 6 rpm | 7,100 | 4,500 | 360 | 4,500 | | | | |
| 60 rpm | 800 | 580 | 120 | 720 | | | | |

Examples 1 to 7, Comparative Examples 1 to 5:

A 2 wt.% aqueous dispersion of each of the above-mentioned silicate compounds A to D was added to a 5.5 % liquid of a mixture obtained by mixing polyepoxide compound/blocked isocyanate compound/rubber latex at a ratio, in terms of the solid contents, of 11.0 wt.%/23.0 wt.%/66.0 wt.%, the proportion of the aqueous dispersion added being indicated in Table 2 below. Thus, seven first treating liquids (Examples 1 to 7) were prepared. The stability of these first treating liquids is shown in Table 2.

14.3 parts by weight of resorcinol/formalin (R/F) precondensate (RF resin) obtained by ripening R/F for 4 hours, at a molar ratio of 1/1.5 and at a solid concentration of 10 % by weight, in the presence of an ordinary alkaline catalyst were added to 100 parts by weight of vinylpyridine/styrene/butadiene copolymer latex (VP latex) and ripened for 24 hours to prepare RFL having a solid concentration of 20 % by weight. 10 parts by weight of an aqueous dispersion of diphenylmethane-bis-4,4'-N,N'-diethylene-urea were added to 100 parts of the RFL to prepare a second treating liquid having a solid concentration of 12 % by weight.

For comparison, five first treating liquids (Comparative Examples 1 to 5) were prepared in the same manner as above, except that a 2 wt.% aqueous dispersion of each of the above-mentioned silicate compounds E to H was added in place of the aqueous dispersions of compounds A to D, at the proportion indicated in Table 3, or no silicate compound was added. The stability of these first treating liquids is shown in Table 3.

Polyethylene terephthalate having a yarn (relative) viscosity of 0.95 was melt-spun and stretched to give multi-filaments of 1500 deniers. These were twisted 40 times/10 cm (for primary twist). Two of the thus-twisted cords were further twisted at the same count as tnat of the primary twist but in the opposite direction (for final twist) to obtain a raw cord.

Next, using a computreater single dipping machine (produced by C. A. Litzler, USA), the first treating liquid having the composition shown in Tables 2 and 3 was applied to the raw cord, and the thus-treated cord was wiped with an air wiper under a pressure of 0.15 kg/cm$^2$, then passed through a drying zone at 120°C at a constant speed for 100 seconds and thereafter heat-treated in a hot-stretching zone under a tension of 0.8 g/d at 240°C for 30 seconds.

Next, the second treating liquid was applied to the polyester cord that had been treated with the first treating liquid as described above, and then the cord was wiped with an air wiper under a pressure of 0.30 kg/cm$^2$, then passed through a drying zone at 100°C at a constant speed for 100 seconds, thereafter heat-treated in a hot-stretching zone under tension of 0.7 g/d at 240°C for 30 seconds, and further heat-treated in a normalising zone at 240°C for 30 seconds while relaxing the cord by 2.0 %.

The thus-treated cords were evaluated in terms of their characteristics, and the results are shown in Tables 2 and 3.

Table 2

| Examples | 1 | 2 | 3 | 4 | 5 | 6 | 7 |
|---|---|---|---|---|---|---|---|
| Silicate Compound | A | A | A | A | B | C | D |
| Condition of Aqueous Dispersion of Silicate Compound | Viscosity increased. | Viscosity increased. | Viscosity increased. | Viscosity increased. | Viscosity increased. | Viscosity increased. | Viscosity increased. |
| Amount of Aqueous Dispersion of Silicate Compound Added | 5.5 | 11.0 | 19.0 | 27.5 | 11.0 | 11.0 | 11.0 |
| Stability of First Treating Liquid | Good | Good | Good | Good | Good | Good | Good |
| T-Adhesive Strength (g/d) | 7.3 | 7.0 | 6.8 | 6.0 | 6.6 | 6.5 | 5.9 |

Table 2 (continued)

| Examples | 1 | 2 | 3 | 4 | 5 | 6 | 7 |
|---|---|---|---|---|---|---|---|
| Silicate Compound | A | A | A | A | B | C | D |
| Cord Hardness (g/cord) | 15.0 | 12.2 | 10.6 | 7.3 | 11.8 | 10.9 | 11.0 |
| Percentage of Retention of Strength after GD Fatigue Test (%) | 95 | 95 | 96 | 98 | 96 | 95 | 94 |
| Amount of Resin Adhered (%) | 3.5 | 2.8 | 2.3 | 2.1 | 2.4 | 2.2 | 2.1 |

Table 3

| Comparative Examples | 1 | 2 | 3 | 4 | 5 |
|---|---|---|---|---|---|
| Silicate Compound | E | F | G | H | - |
| Condition of Aqueous Dispersion of Silicate Compound | Precipitated and separated. | Precipitated and separated. | Precipitated and separated. | Precipitated and separated. | - |
| Amount of Aqueous Dispersion of Silicate Compound Added | 11.0 | 11.0 | 11.0 | 11.0 | 0 |
| Stability of First Treating Liquid | Bad | Bad | Bad | Bad | Good |
| T-Adhesive Strength (g/d) | 4.2 | 3.6 | 4.0 | 3.5 | 6.5 |
| Cord Hardness (g/cord) | 19.5 | 18.9 | 20.3 | 20.8 | 40.3 |
| Percentage of Retention of Strength after GD Fatigue Test (%) | 88 | 83 | 85 | 82 | 75 |
| Amount of Resin Adhered (%) | 2.1 | 2.2 | 2.4 | 2.3 | 2.5 |

Examples 8 to 14, Comparative Examples 6 to 10:

12.5 parts by weight of resorcinol/formalin (R/F) precondensate (RF resin) obtained by ripening R/F for 2 *hours,* at a molar ratio of 1/1.5 and at a solid concentration of 10 % by weight, in the presence of a conventional alkaline catalyst were added to 100 parts by weight of vinylpyridine/styrene/butadiene copolymer latex (VP latex) and ripened

for 24 hours to prepare RFL having a solid concentration of 30 % by weight. 23 % by weight of an adsorption-type adhesive, Denabond (produced by Nagase Chemical) or Sumikanol 750 (produced by Sumitomo Chemical) were added to 100 parts of the RFL, water was added thereto to provide a mixture having a solid concentration of 14 % by weight, and the resulting mixture was ripened for 24 hours. Next, a 2 wt.% aqueous dispersion of each of the above-mentioned silicate compounds A to D was added to the mixture in the proportion indicated in Table 4. Thus, seven treating liquids were prepared (Examples 8 to 14). The stability of these treating liquids is shown in Table 4.

For comparison, five other treating liquids (Comparative Examples 6 to 10) were prepared in the same manner as above, except that a 2 wt.% aqueous dispersion of silicate compounds E was added in place of the aqueous dispersions of compounds A to D, in the proportion indicated in Table 5, or no silicate compound was added. The amount of the adsorption-type adhesive added is shown in Table 5. The stability of these treating liquids is shown in Table 5.

Polyethylene terephthalate having a yarn viscosity of 0.95 was melt-spun and stretched to give multi-filaments of 1500 deniers. These were twisted 40 times/10 cm (for primary twist). Two of the thus-twisted cords were further twisted at the same count as that of the primary twist but in the opposite direction (for final twist) to obtain a raw cord.

Next, using a computreater single dipping machine (produced by Litzler, USA), the treating liquid having the composition shown in Tables 4 and 5 was applied to the raw cord, and the thus-treated cord was wiped with an air wiper under a pressure of 0.35 kg/cm$^2$, then passed through a drying zone at 130°C at a constant speed for 100 seconds, thereafter heat-treated in a hot-stretching zone under a tension of 0.8 g/d at 250°C for 30 seconds and further heat-treated in a normalizing zone at 250°C for 30 seconds while relaxing the cord by 1.5 %.

The thus-treated cords were evaluated in terms of their characteristics, and the results are shown in Tables 4 and 5.

Table 4

| Examples | 8 | 9 | 10 | 11 | 12 | 13 | 14 |
|---|---|---|---|---|---|---|---|
| Silicate Compound | A | A | A | B | C | D | D |
| Condition of Aqueous Dispersion of Silicate Compound | Viscosity increased. | Viscosity increased. | Viscosity increased. | Viscosity increased. | Viscosity increased. | Viscosity increased. | Viscosity increased. |
| Amount of Aqueous Dispersion of Silicate Compound Added | 10.0 | 20.0 | 15.0 | 15,0 | 15.0 | 15.0 | 15.0 |
| Stability of Treating Liould | Good | Good | Good | Good | Good | Good | Good |
| Adsorption-type Adhesive Added | Denabond | Denabond | S-750 | Denabond | Denabond | Denabond | S-750 |
| T-Adhesive Strength (g/d) | 6.9 | 6.3 | 6.0 | 6.5 | 6.3 | 6.0 | 6.0 |
| Cord Hardness (g/cord) | 13.0 | 8.3 | 9.5 | 10.2 | 9.8 | 10.9 | 10.3 |

Table 4 (continued)

| Examples | 8 | 9 | 10 | 11 | 12 | 13 | 14 |
|---|---|---|---|---|---|---|---|
| Silicate Compound | A | A | A | B | C | D | D |
| Percentage of Retention of Strength after GD Fatigue Test (%) | 95 | 98 | 9/ | 98 | 96 | 95 | 95 |
| Amount of Resin Adhered (%) | 2.9 | 2.5 | 2.7 | 2.8 | 2.8 | 3.0 | 3.5 |

Table 5

| Comparative Examples | 6 | 7 | 8 | 9 | 10 |
|---|---|---|---|---|---|
| Silicate Compound | E | E | - | - | |
| Condition of Aqueous Dispersion of Silicate Compound | Precipitated and separated. | Precipitated and separated. | Precipitated and separated. | - | - |
| Stability of Treating Liquid | Bad | Bad | Good | Good | Good |
| Adsorption-type Adhesive Added | Denabond | S-750 | Denabond | S-750 | Denabond |
| Amount of Adhesive Added | 14.0 | 14.0 | 14.0 | 14.0 | 20.0 |
| T-Adhesive Strength (g/d) | 4.2 | 3.8 | 4.3 | 4.3 | 6.0 |
| Cord Hardness (g/cord) | 18.8 | 19.8 | 21.3 | 20.5 | 23.8 |
| Percentage of Retention of Strength after GD Fatigue Test (%) | 90 | 88 | 93 | 92 | 90 |
| Amount of Resin Adhered(%) | 3.0 | 3.2 | 3.0 | 6.5 | 6.5 |

Examples 15 to 20, Comparative Examples 11 to 13:

Sumikanol 700 (produced by Sumitomo Chemical)/formalin were mixed at a ratio by weight of 87/13 in the presence of an alkaline catalyst and ripened for 2 hours to obtain a precondensate having a solid concentration of 6.5 % by weight.

Separately, 10 parts by weight of 28 % aqueous ammonia were mixed with 100 parts by weight of a latex mixture obtained by mixing vinylpyridine/styrene/butadiene copolymer latex (VP latex) and styrene/butadiene copolymer latex (SBR latex) at a ratio by weight of 50/50 in terms of the solid contents.

Next, 18 parts by weight of the above-mentioned precondensate were mixed with 100 parts by weight of the above-mentioned latex mixture and ripened for 24 hours to prepare an RFL having a solid concentration of 14 % by weight.

A 2 wt.% aqueous dispersion of each of the above-mentioned silicate compounds A to D was added to 100

% by weight of this RFL, in the proportion indicated in Table 6, to prepare six treating liquids (Examples 15 to 20). The stability of these treating liquids is shown in Table 6.

For comparison, a precondensate having a solid concentration of 10 % by weight was obtained by mixing resorcinol/formalin at a a molar ratio of 1/2 in the presence of an alkaline catalyst followed by ripening the mixture for 2 hours, and 18 parts by weight of this precondensate were mixed with 100 parts by weight of the same latex mixture as above and ripened for 24 hours to prepare RFL's having a solid concentration of 14 % by weight and 20 by weight as shown in Table 7 (Comparative Examples 12 and 13).

Also for comparison, a 2 wt.% aqueous dispersion of the above-mentioned silicate compound E was added to the RFL having a solid concentration of 14 % by weight, in the proportion indicated in Table 7 (Comparative Example 11).

The stability of these comparative treating liquids is shown in Table 7.

Nylon 66 having a yarn viscosity of 0.95 was melt-spun and stretched to give multi-filaments of 1260 deniers having a raw yarn strength of 11.2 g/d. These were twisted 39 times/10 cm (for primary twist). Two of the thus-twisted cords were further twisted at the same count as that of the primary twist but in the opposite direction (for final twist) to obtain a raw cord. This raw cord had a strength of 9.40 g/d.

Next, using a computreater single dipping machine (produced by Litzler, USA), the treating liquid having the composition shown in Tables 6 and 7 was applied to the raw cord, and the thus-treated cord was wiped with an air wiper under a pressure of 0.30 kg/cm$^2$, then passed through a drying zone at 130°C at a constant speed for 100 seconds, thereafter heat-treated in a hot-stretching zone under tension of 0.9 g/d at 230°C for 50 seconds and further heat-treated in a normalizing zone at 225°C for 50 seconds while relaxing the cord by 1.5 %.

The thus-treated cords were evaluated in terms of their characteristics, and the results are shown in Tables 6 and 7.

Table 6

| Examples | 15 | 16 | 17 | 18 | 19 | 20 |
|---|---|---|---|---|---|---|
| Silicate Compound | A | A | A | B | C | D |
| Condition of Aqueous Dispersion of Silicate Compound | Viscosity increased. | Viscosity increased. | Viscosity increased. | Viscosity increased. | Viscosity increased. | Viscosity increased. |
| Amount of Aqueous Dispersion of Silicate Compound Added | 10 | 15 | 20 | 15 | 15 | 15 |
| Stability of Treating Liquid | Good | Good | Good | Good | Good | Good |
| T-Adhesive Strength (g/d) | 7.1 | 5.9 | 6.1 | 5.8 | 6.7 | 5.9 |
| Cord Hardness (g/cord) | 17.4 | 10.5 | 9.5 | 10.2 | 13.8 | 11.3 |
| Percentage of Retention of Strength after GD Fatigue Test (%) | 88 | 90 | 91 | 89 | 92 | 89 |
| Cord Strength (g/d) | 10.0 | 10.5 | 10.13 | 10.08 | 10.20 | 10.10 |

Table 6 (continued)

| Examples | 15 | 16 | 17 | 18 | 19 | 20 |
|---|---|---|---|---|---|---|
| Silicate Compound | A | A | A | B | C | D |
| Strength after Vulcanization (g/d) | 9.50 | 9.60 | 9.55 | 9.45 | 9.61 | 9.53 |
| Amount of Resin Adhered (%) | 4.5 | 3.3 | 3.2 | 3.1 | 3.8 | 3.2 |

Table 7

| Comparative Examples | 11 | 12 | 13 |
|---|---|---|---|
| Silicate Compound | E | - | - |
| Condition of Aqueous Dispersion of Silicate Compound | Precipitated and separated. | - | - |
| Amount of Aqueous Dispersion of Silicate Compound Added | 15 | - | - |
| Stability of Treating Liquid | Bad | Good | Good |
| Concentration of Treating Liquid (%) | 14.0 | 14.0 | 20.0 |
| T-Adhesive Strength (g/d) | 5.3 | 5.7 | 5.9 |
| Cord Hardness (g/cord) | 16.5 | 22.3 | 29.8 |
| Percentage of Retention of Strength after GD Fatigue Test (%) | 78 | 78 | 70 |
| Cord Strength (g/d) | 9.80 | 9.30 | 8.80 |
| Strength after Vulcanization (g/d) | 9.00 | 8.35 | 8.00 |
| Amount of Resin Adhered (%) | 3.4 | 3.3 | 5.0 |

Examples 21 to 25, Comparative Examples 14 and 15:

A 2 wt.% aqueous dispersion of each of the above-mentioned silicate compounds A to D was added to a 5.5 % liquid of a mixture obtained by mixing polyepoxide compound/blocked isocyanate compound/rubber latex at a ratio, in terms of the solid contents, of 11.0 wt.%/23.0 wt.%/66.0 wt.%, the proportion of the aqueous dispersion added being indicated in Table 8 below. Thus, five first treating liquids (Examples 21 to 25) were prepared. The stability of these first treating liquids is shown in Table 8.

14.3 parts by weight of resorcinol/formalin (R/F) precondensate (RF resin) obtained by ripening R/F for 4 hours, at a molar ratio of 1/1.5 and at a solid concentration of 10 % by weight, in the presence of a conventional alkaline catalyst were added to 100 parts by weight of vinylpyridine/styrene/butadiene copolymer latex (VP latex) and ripened for 24 hours to prepare RFL having a solid concentration of 20 % by weight. 10 parts by weight of an aqueous dispersion or diphenylmethane-bis-4,4'-N,N'-diethylene-urea were added to 100 parts of the RFL to prepare a second treating liquid having a solid concentration of 12 % by weight.

For comparison, two first treating liquids (Comparative Examples 14 and 15) were prepared in the same manner as above, except that a 2 wt.% aqueous dispersion of the above-mentioned silicate compound E was added in place of the aqueous dispersions of compounds A to D, in a proportion of 15 % by weight, or no silicate compound was added. The stability of these first treating liquids is shown in Table 8.

Aromatic polyamide filament yarns having a nominal fineness of 1500 deniers and comprising 1000 filaments ( Kevlar, produced by DuPont) were twisted 35 times/10 cm (for primary twist). Two of the thus-twisted cords were further twisted at the same count as that of the primary twist but in the opposite direction (for final twist) to obtain a raw cord. The strength of this raw cord was 17.5 g/d.

Next, using a computreater single dipping machine (produced by Litzler, USA), the first treating liquid having the composition shown in Table 8 was applied to the raw cord, and the thus-treated cord was wiped with an air wiper under a pressure of 0.10 kg/cm$^2$, then passed through a drying zone at 130°C at a constant speed for 150 seconds and thereafter heat-treated in a hot-stretching zone under a tension of 0.5 g/d at 240°C for 60 seconds.

Next, the second treating liquid was applied to the aromatic polyamide cord that had been treated with the

first treating liquid as described above, and then the cord was passed through a drying zone at 100°C at a constant speed for 150 seconds, thereafter heat-treated in a hot-stretching zone under a tension of 0.25 g/d at 230°C for 60 seconds, and further heat-treated as it was in a normalizing zone at 23.0°C for 30 seconds.

The thus-treated cords were evaluated in terms of their characteristics, and the results are shown in Table 8.

Table 8

| | Examples | | | | | Comparative Examples | |
|---|---|---|---|---|---|---|---|
| | 21 | 22 | 23 | 24 | 25 | 14 | 15 |
| Silicate Compound | A | A | B | C | D | E | - |
| Condition of Aqueous Dispersion of Silicate Compound | Viscosity increased. | Viscosity increased. | Viscosity increased. | Viscosity increased. | Viscosity increased. | Precipitated and separated. | - |
| Amount of Aqueous Dispersion of Silicate Compound Added | 10 | 20 | 15 | 15 | 15 | 15 | 0 |
| Stability of First Treating Liquid | Good | Good | Good | Good | Good | Bad | Good |
| T-Adhesive Strength (g/d) | 7.2 | 6.9 | 6.5 | 6.4 | 5.7 | 4.0 | 6.3 |
| Cord Hardness (g/cord) | 17.4 | 7.8 | 10.5 | 10.2 | 10.6 | 18.8 | 36.1 |
| Percentage of Retention of Strength after GD Fatigue Test (%) | 88 | 97 | 93 | 97 | 95 | 87 | 72 |
| Amount of Resin Adhered (%) | 5.1 | 3.6 | 4.0 | 4.3 | 4.0 | 4.0 | 3.8 |

Examples 26 to 31, Comparative Examples 16 and 17:

A resorcinol/formalin (R/F) precondensate (RF resin) was obtained by ripening R/F for 6 hours, at a molar

ratio of 1/2 and at a solid concentration of 10 % by weight, in the presence of an alkaline catalyst. 17 parts by weight of this RF resin were mixed with 100 parts by weight of a latex mixture prepared by mixing vinylpyridine/styrene/butadiene copolymer latex (VP latex) and low-molecular weight styrene/butadiene copolymer latex (SBR latex) at a ratio by weight of 7/3 in terms of the solid contents, water was added thereto so that the resulting mixture had a solid concentration of 14 % by weight (RFL), and this RFL was ripened for 24 hours.

To respective 100 parts by weight of the thus-obtained RFL, each of the above-mentioned silicate compounds (2 % by weight) was added in a proportion indicated in Table 9 (Examples 26 to 30).

For comparison, two other treating liquids were prepared in the same manner as above, except that a 2 wt. % aqueous solution of the above-mentioned silicate compound E was used in place of the silicate compounds A to D or no silicate compound was added (Comparative Examples 16 and 17).

The stability of these treating liquids is shown in Table 9.

Separately, a completely saponified polyvinyl alcohol having a degree of polymerization of 3500 and a degree of saponification of 99.5 % or more was spun by alternate spinning and then stretched to give multi-filaments of 1200 deniers comprising 750 filaments. These filaments were twisted 35 times/10 cm (for primary twist). Two of the thus-twisted cords were further twisted at the same count as that of the primary twist but in the opposite direction (for final twist) to obtain a raw cord.

Next, using a computreater single dipping machine (produced by Litzler , USA), the above-mentioned treating liquid was applied to the raw cord, and the thus-treated cord was wiped with an air wiper under a pressure of 0.3 kg/cm$^2$, then passed through a drying zone at 120°C at a constant speed for 150 seconds, thereafter heat-treated in a hot-stretching zone under a tension of 0.5 % at 200°C for 30 seconds and further heat-treated as it was in a normalizing zone at 200°C for 30 seconds.

The thus-treated cords were evaluated in terms of their characteristics, and the results are shown in Table 9.

The same effects as above were obtained when a novolak-type RF, Sumicanol S-700 (produced by Sumitomo Chemical) was used in place of the above-mentioned RF resin (Example 31).

Table 9

| | Examples | | | | | Comparative Examples | |
|---|---|---|---|---|---|---|---|
| | 26 | 27 | 28 | 29 | 30 | 16 | 17 |
| Silicate Compound | A | A | B | C | D | E | - |
| Condition of Aqueous Dispersion of Silicate Compound | Viscosity increased. | Viscosity increased. | Viscosity increased. | Viscosity increased. | Viscosity increased. | Precipitated and separated. | - |
| Amount of Aqueous Dispersion of Silicate Compound Added | 10 | 20 | 15 | 15 | 15 | 15 | 0 |
| Stability of Treating Liquid | Good | Good | Good | Good | Good | Bad | Good |
| T-Adhesive Strength (g/d) | 6.7 | 6.5 | 5.7 | 5.9 | 6.3 | 4.9 | 6.5 |
| Cord Hardness (g/cord) | 18.5 | 12.8 | 15.5 | 14.5 | 13.8 | 17.8 | 50.1 |
| Percentage of Retention of Strength after GD Fatigue Test (%) | 87 | 95 | 93 | 90 | 92 | 85 | 55 |
| Amount of Resin Adhered (%) | 4.7 | 3.2 | 3.9 | 4.3 | 4.0 | 4.4 | 8.0 |

As is obvious from the results in Tables 2 to 9, the rubber-reinforcing synthetic fibers treated with the adhesive composition for rubber and fiber of the present invention have well-balanced characteristics in terms of the initial adhesive strength, the cord hardness and the retentiveness of strength after being fatigued. Therefore, by applying the fibers to rubber, it is possible to obtain high-grade fiber-reinforced rubber structures.

As has been described in detail hereinabove, the adhesive composition for rubber and fiber of the present invention makes synthetic fibers highly adhesive to rubber even when a reduced amount of the composition is applied to the fibers. Therefore, it is possible according to the present invention to obtain fiber-reinforced rubber structures at significantly reduced costs.

In addition, since rubber-reinforcing synthetic fibers embodying the present invention have improved adhesiveness to rubber, especially improved adhesive strength (drawing strength) to rubber, while still having the intrinsic characteristics of the synthetic fibers themselves, it is possible according to the present invention to obtain high-grade fiber-reinforced rubber structures which are useful, for example, as tires, belts and hoses.

## Claims

1. An adhesive composition suitable for adhering to one another rubber and fiber, which composition comprises an adhesive matrix containing a silicate compound comprising, as elements thereof, silicon and magnesium at a ratio by weight of silicon/magnesium of from 10/1 to 1/1, and wherein a 1% aqueous dispersion of the silicate compound has a transmittance (T) at 500 nm of 50% or more, as measured after having stirred said dispersion, kept it static for one full day and having confirmed that the dispersion has no precipitate.

2. An adhesive composition according to claim 1, wherein a 2% aqueous dispersion of the silicate compound has a thixotropy index of from 2 to 10.

3. An adhesive composition according to any preceding claim, wherein the silicate compound further contains, as elements thereof, sodium and lithium.

4. An adhesive composition according to any preceding claim, wherein the silicate compound is a smectite.

5. An adhesive composition according to any preceding claim, wherein the adhesive matrix comprises a resorcinol-formaldehyde-rubber latex (RFL).

6. An adhesive composition according to any one of claims 1 to 5, wherein the adhesive matrix comprises a mixture of a rubber latex, a polyepoxide compound and at least one compound selected from a blocked isocyanate and an ethylene-urea compound.

7. An adhesive composition according to any one of claims 1 to 6, wherein the amount of the silicate compound present in the adhesive matrix is from 1 to 10% by weight relative to the adhesive matrix.

8. A synthetic fiber suitable for reinforcing rubber and having coated on its surface an adhesive composition comprising an adhesive matrix according to any preceding claim.

9. A synthetic fiber according to claim 8, wherein the synthetic fiber is a polyester fiber cord, the amount of the adhesive composition coated on the fiber cord is from 2 to 4% by weight of solids relative to the weight of the fiber, the cord hardness is from 5 to 20 g/cord and the drawing T-adhesive strength of the cord is from 5.5 to 7.5 g/d.

10. A synthetic fiber according to claim 8, wherein the synthetic fiber is a polyamide fiber cord, the amount of the adhesive composition coated on the fiber cord is from 2 to 5% by weight of solids relative to the weight of the fiber, the cord hardness is from 5 to 20 g/cord and the drawing T-adhesive strength of the cord is from 5.5 to 7.5 g/d.

11. A synthetic fiber according to claim 8, wherein the synthetic fiber is an aromatic polyamide fiber cord, the amount of the adhesive composition coated on the fiber cord is from 3 to 6% by weight of solids relative to the weight of the fiber, the cord hardness is from 5 to 20g/cord and the drawing T-adhesive strength of the cord is from 5.5 to 7.5 g/d.

12. A synthetic fiber according to claim 8, wherein the synthetic fiber is a polyvinyl alcohol fiber cord, the amount of the adhesive composition coated on the fiber cord is from 2 to 5% by weight of solids relative to the weight of the fiber, the cord hardness is from 5 to 20 g/cord and the drawing T-adhesive strength of the cord is from 5.5 to 7.5 g/d.

**13.** A synthetic fiber according to any one of claims 9 to 12, wherein the synthetic fiber cord has both a primary twist and a final twist while the twist coefficient for the final twist is from 900 to 1800 and the twist coefficient for the primary twist is from 1300 to 2500.

**14.** A process for producing a synthetic fiber according to any one of claims 8 to 13 comprising treating the fiber with an adhesive composition containing a silicate compound and RFL.

**15.** A process for producing a synthetic fiber according to any one of claims 8 to 13 comprising treating the fiber with an adhesive composition containing a silicate compound and then treating the fiber with an adhesive composition containing RFL.

**16.** A fiber-reinforced rubber structure wherein the rubber is reinforced by a synthetic fiber according to any one of claims 8 to 13.

**Patentansprüche**

**1.** Kleberzusammensetzung, die geeignet ist um Kautschuk und Fasern miteinander zu verkleben, wobei die Zusammensetzung eine Klebermatrix umfasst, die eine Silikatverbindung enthält, welche die Elemente Silizium und Magnesium in einem Gewichtsverhältnis Silizium/ Magnesium = 10/1 bis 1/1 umfasst, und worin eine 1 %ige wässrige Dispersion der Silikatverbindung eine Durchlässigkeit (T) bei 500 nm von 50 % oder mehr aufweist, die gemessen wurde, nachdem die Dispersion gerührt, einen ganzen Tag lang stehen gelassen und bestätigt wurde, dass die Dispersion keinen Niederschlag umfasst.

**2.** Kleberzusammensetzung nach Anspruch 1, worin eine 2%ige wässrige Dispersion der Silikatverbindung einen Thixotropieindex von 2 bis 10 aufweist.

**3.** Kleberzusammensetzung nach einem der vorangegangenen Ansprüche, worin die Silikatverbindung weiters die Elemente Natrium und Lithium enthält.

**4.** Kleberzusammensetzung nach einem der vorangegangenen Ansprüche, worin die Silikatverbindung ein Smektit ist.

**5.** Kleberzusammensetzung nach einem der vorangegangenen Ansprüche, worin die Klebermatrix einen Resorcin-Formaldehyd-Kautschuk-Latex (RFL) umfasst.

**6.** Kleberzusammensetzung nach einem der Ansprüche 1 bis 5, worin die Klebermatrix ein Gemisch aus einem Kautschuklatex, einer Polyepoxid-Verbindung und zumindest einer aus einem blockierten Isocyanat und einer Ethylen-Harnstoff-Verbindung ausgewählten Verbindung umfasst.

**7.** Kleberzusammensetzung nach einem der Ansprüche 1 bis 6, worin die in der Klebermatrix vorhanden Menge der Silikatverbindung von 1 bis 10 Gew.-%, bezogen auf die Klebermatrix, beträgt.

**8.** Synthetische Faser, die zur Verstärkung von Gummi geeignet ist und deren Oberfläche mit einer Kleberzusammensetzung beschichtet ist, die eine Klebermatrix nach einem der vorangegangenen Ansprüche umfasst.

**9.** Synthetische Faser nach Anspruch 8, worin die synthetische Faser ein Polyester-Fasercord ist, die Menge der auf den Fasercord aufgetragenen Kleberzusammensetzung 2 bis 4 Gew.-% der Feststoffe, bezogen auf das Gewicht der Faser, beträgt, die Cordhärte 5 bis 20 g/Cord beträgt und die T-Streckhaftfestigkeit des Cords 5,5 bis 7,5 g/d beträgt.

**10.** Synthetische Faser nach Anspruch 8, worin die synthetische Faser ein Polyamid-Fasercord ist, die Menge der auf den Fasercord aufgetragenen Kleberzusammensetzung 2 bis 5 Gew.-% der Feststoffe, bezogen auf das Gewicht der Faser, beträgt, die Cordhärte 5 bis 20 g/Cord beträgt und die T-Streckhaftfestigkeit des Cords 5,5 bis 7,5 g/d beträgt.

**11.** Synthetische Faser nach Anspruch 8, worin die synthetische Faser ein aromatischer Polyamid-Fasercord ist, die Menge der auf den Fasercord aufgetragenen Kleberzusammensetzung 3 bis 6 Gew.-% der Feststoffe, bezogen

auf das Gewicht der Faser, beträgt, die Cordhärte 5 bis 20 g/Cord beträgt und die T-Streckhaftfestigkeit des Cords 5,5 bis 7,5 g/d beträgt.

**12.** Synthetische Faser nach Anspruch 8; worin die synthetische Faser ein Polyvinylalkohol-Fasercord ist, die Menge der auf den Fasercord aufgetragenen Kleberzusammensetzung 2 bis 5 Gew.-% der Feststoffe, bezogen auf das Gewicht der Faser, beträgt, die Cordhärte 5 bis 20 g/Cord beträgt und die T-Streckhaftfestigkeit des Cords 5,5 bis 7,5 g/d beträgt.

**13.** Synthetische Faser nach einem der Ansprüche 9 bis 12, worin der Synthesefasercord sowohl eine Primärzwirnung als auch eine Endzwirnung aufweist, wobei der Zwirnungskoeffizient für die Endzwirnung 900 bis 1.800 beträgt und der Zwirnungskoeffizient für die Primärzwirnung 1.300 bis 2.500 beträgt.

**14.** Verfahren zur Herstellung einer synthetischen Faser nach einem der Ansprüche 8 bis 13, umfassend die Behandlung der Faser mit einer Kleberzusammensetzung, die eine Silikatverbindung und einen RFL enthält.

**15.** Verfahren zur Herstellung einer synthetischen Faser nach einem der Ansprüche 8 bis 13, umfassend die Behandlung der Faser mit einer Kleberzusammensetzung, die eine Silikatverbindung enthält, und die anschließende Behandlung der Faser mit einer Kleberzusammensetzung, die einen RFL enthält.

**16.** Faserverstärkte Gummistruktur, worin der Gummi mit einer synthetischen Faser nach einem der Ansprüche 8 bis 13 verstärkt ist.

**Revendications**

**1.** Composition adhésive appropriée pour faire adhérer l'un à l'autre du caoutchouc et une fibre, laquelle composition comprend une matrice adhésive contenant un composé de silicate comprenant, comme éléments, du silicium et du magnésium à un rapport en poids silicium/magnésium de 10/1 à 1/1, et où une dispersion aqueuse à 1% du composé de silicate a une transmittance (T) à 500 nm de 50% ou plus, en mesurant après avoir soumis ladite dispersion à agitation, l'avoir maintenue statique pendant un jour complet et avoir confirmé que la dispersion n'a pas précipité.

**2.** Composition adhésive selon la revendication 1 où une dispersion aqueuse à 2% du composé de silicate a un indice de thixotropie de 2 à 10.

**3.** Composition adhésive selon toute revendication précédente, où le composé de silicate contient de plus, comme éléments, du sodium et du lithium.

**4.** Composition adhésive selon toute revendication précédente, où le composé de silicate est de la smectite.

**5.** Composition adhésive selon toute revendication précédente, où la matrice adhésive comprend du résorcinol-formaldéhyde-latex de caoutchouc (RFL).

**6.** Composition adhésive selon l'une quelconque des revendications 1 à 5, où la matrice adhésive comprend un mélange d'un latex de caoutchouc,d'un composé polyépoxyde et d'au moins un composé sélectionné parmi un isocyanate bloqué et un composé d'éthylène-urée.

**7.** Composition adhésive selon l'une quelconque des revendications 1 à 6, où la quantité du composé de silicate présent dans la matrice adhésive est de 1 à 10% en poids relativement à la matrice adhésive.

**8.** Fibre synthétique appropriée à renforcer du caoutchouc et ayant, enrobée sur sa surface, une composition adhésive comprenant une matrice adhésive selon toute revendication précédente.

**9.** Fibre synthétique selon la revendication 8, où la fibre synthétique est une corde de fibres de polyester, la quantité de la composition adhésive enrobée sur la corde de fibres est de 2 à 4% en poids des solides relativement au poids de la fibre, la dureté de la corde est de 5 à 20 g/corde et la force adhésive à l'étirage en T de la corde et de 5,5 à 7,5 g/d.

**10.** Fibre synthétique selon la revendication 8, où la fibre synthétique est une corde de fibres de polyamide, la quantité de la composition adhésive enrobée sur la corde de fibres est de 2 à 5% en poids des solides relativement au poids de la fibre, la dureté de la corde est de 5 à 20 g/corde et la force adhésive à l'étirage T de la corde est de 5,5 à 7,5 g/d.

**11.** Fibre synthétique selon la revendication 8, où la fibre synthétique est une corde de fibre de polyamide aromatique, la quantité de la composition adhésive enrobée sur la corde de fibre de 3 à 6% en poids des solides relativement au poids de la fibre, la dureté de la corde est de 5 à 20g/corde et la force adhésive à l'étirage T de la corde est de 5,5 à 7,5 g/d.

**12.** Fibre synthétique selon la revendication 8, où la fibre synthétique est une corde de fibres d'alcool polyvinylique, la quantité de la composition adhésive enrobée sur la corde de fibres est de 2 à 5% en poids des solides relativement au poids de la fibre, la dureté de la corde est de 5 à 20 g/corde et la force adhésive à l'étirage T de la corde est de 5,5 à 7,5 g/d.

**13.** Fibre synthétique selon l'une quelconque des revendications 9 à 12, où la corde de fibres synthétiques a une torsion primaire et une torsion finale alors que le coefficient de torsion pour la torsion finale est de 900 à 1800 et le coefficient de torsion pour la torsion primaire est de 1300 à 2500.

**14.** Procédé de production d'une fibre synthétique selon les revendications 8 à 13, comprenant le traitement de la fibre avec une composition adhésive contenant un composé de silicate et RFL.

**15.** Procédé de production d'une fibre synthétique selon les revendications 8 à 13, comprenant le traitement de la fibre avec une composition adhésive contenant un composé de silicate et puis le traitement de la fibre avec une composition adhésive contenant RFL.

**16.** Structure de caoutchouc renforcé de fibres où le caoutchouc est renforcé par une fibre synthétique selon l'une quelconque des revendications 8 à 13.